# EUROPEAN PATENT SPECIFICATION

(11) **EP 3 205 921 B1**
(45) Date of publication and mention of the grant of the patent: **22.05.2019**
(21) Application number: 16000345.5
(22) Date of filing: 11.02.2016
(51) Int. Cl.: F16L 57/06, B65G 11/16, F16L 3/16

(54) **SUPPLY CHUTE FOR STONE MATERIAL**
ZUFÜHRSCHURRE FÜR STEINMATERIAL
GOULOTTE D'ALIMENTATION POUR UN MATÉRIAU PIERREUX

(43) Date of publication of application: 16.08.2017
(73) Proprietor: lin konepaja Oy, 91100 li (FI)
(72) Inventor: Salmela, Kalevi, 92100 Raahe (FI)

(56) References cited:
- CA-A1- 2 488 958
- DE-C- 937 638
- DE-C- 970 779
- US-A1- 2004 065 377

## Description

The invention relates to a chute, which suits primarily for supplying stone material into a milling machinery. A supply chute according to the invention is typically used in the concentrator of a mine.

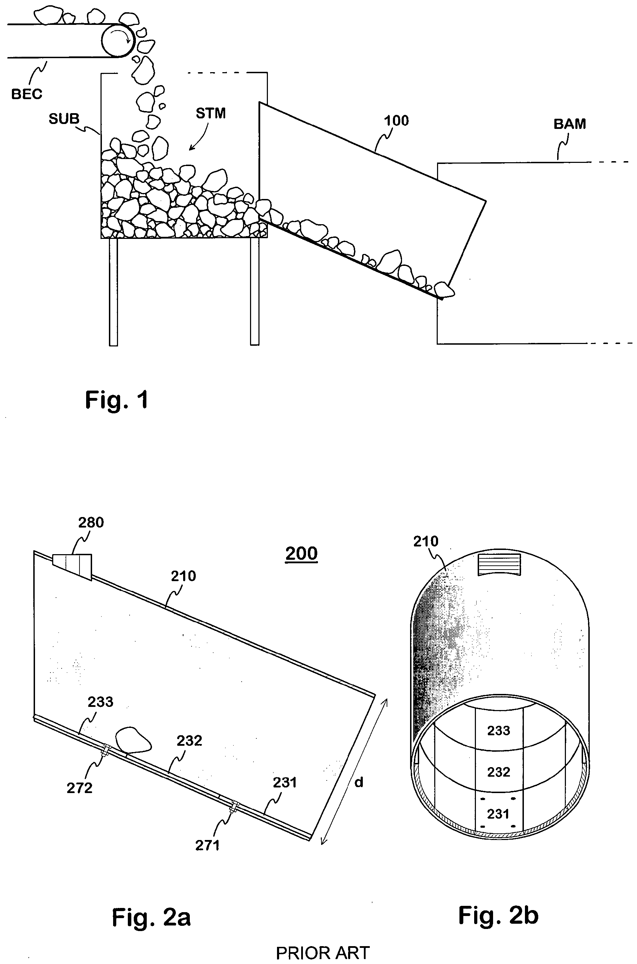

**Fig. 1** shows a principled drawing of the transfer system of stone material to a milling machinery. A conveyer belt BEC for stone material STM, supply box SUB, supply chute 100 and milling machinery BAM are seen in the figure. The end of the conveyer belt is located above the supply box so that the stone material carried by the belt drops into the supply box.

The supply chute 100 is a wide pipe, which is mounted at a tilt e.g. at an angle of 25 degrees. The upper end of the pipe extends through a hole in a wall of the supply box SUB and the lower end is located inside the end of the milling machinery BAM. When the upper level of the stone material STM accumulated in the supply box rises above the lower surface of the upper end of the supply chute, the material dropping into the supply box rolls into the supply chute and further along its inner surface into the milling machinery.

**Figs. 2a** and **2b** show an example of the known supply chute for stone material. Fig. 2a shows the supply chute 200 as longitudinal section and Fig. 2b as seen from the lower end. The basic part of the supply chute 200 is a supply pipe 210 made from a steel, the diameter **d** of the pipe being in the order of 120 cm. The upper end of the pipe has been cut as oblique so that its cross surface is vertical, when the chute is in the use position. At the upper surface of the pipe there is a checking hatch 280 for watching the condition of the chute.

The lower side of the inner wall of the supply pipe 210 has been coated by the steel plates 231, 232, 233. In the example the plates are in five rows, three plates in each row. The steel plates have been fastened on the pipe's wall by bolts 271, 272. In the example each plate has been fastened by four bolts. After bolting the steel plates further are welded together. By means of the steel plates it is implemented wearing course in the supply pipe 210. Without them the stone avalanche would wear its bottom so that the whole supply pipe should be replaced quite too often. When the steel plates are very worn, the wearing course is renewed replacing only them, not the pipe.

A drawback of the above-described structure is that the replacement or repair of the steel plates of the chute requires much work and time. In addition, it has to be done relatively often, in practice at six week intervals, which causes remarkable labour costs and material costs. Further a drawback of the known structure is that leaks begin to occur during the use at the fastening bolts of the steel plates of the supply chute. This results in that the floor below the chute gets dirty, which means continuous cleaning costs.

From document DE 970 779 is known a supply chute for wearing material. The chute is mounted at a tilt, and it consists of an outer pipe and inner pipe. There are longitudinal openings with constant distances in the inner pipe and respectively longitudinal plates on the inner surface of the outer pipe. The plates match with the openings of the inner pipe so that this is locked at its position. The outer pipe comprises upper and lower halves, which are fastened to each other by bolts. When the inner pipe is worn at its bottom, the bolts are loosened, the upper part of the outer pipe is removed and the inner pipe is rotated so that the plates of the outer pipe match with the next openings of the inner pipe. Then the upper part of the outer pipe is naturally fastened again. In this way the material of the inner pipe will be utilized for the most part. The rotation of the inner pipe is time-consuming and requires heavy work.

From document DE 937 638 is known a pipe structure for transferring different materials. The pipe consists of plurality of successive parts fastened by flange joints. The pressure inside the pipe can be remarkably high. The pipe has an outer part and inner part. That the inner pipe would wear evenly, it can be rotated, in each successive part of the pipe. For this purpose there is a longitudinal slit in the inner pipe. When this slit is pressed closed, the friction between the inner and outer pipe reduces, in which case the rotation of the inner pipe is facilitated.

From document CA 2 488 958 is known a moving structure of a long pipe intended for transferring different materials. Normally the pipe rests on transverse rollers, which enable a longitudinal movement caused by temperature changes. To wear the pipe evenly from inside, it can be also rotated. For this purpose there are pairs of longitudinal rollers at certain distances. The pipe is lifted hydraulically above the transverse rollers, resting then on the longitudinal rollers, which are provided with rolling motors. When the longitudinal rollers rotate, also the whole pipe rotates. Finally the pipe is laid again on the transverse rollers.

From document US 2004/0065377 is known a control system for monitoring the condition of a wearing surface, e.g. the inner surface of a material transfer pipe. Inside the pipe wall there is conductive material. When the surface is worn sufficiently, the conductive material is damaged, in which case the conductivity decreases. This is detected by external device and the information is sent to the monitoring station. Thereafter the pipe can be rotated in some way.

The object of the invention is to reduce said drawbacks of the prior art. An supply chute according to the invention is characterized in what is set forth in the independent claim 1. Some preferred embodiments of the invention are set forth in the other claims.

The basic idea of the invention is the following: A chute supplying stone material into a mill machinery consists of a supply pipe, or outer pipe, and a rotatable, hard wearing inner pipe inside it. The rotatableness is implemented by mounting the support rollers with bearings under the inner pipe. During the use the inner pipe is fastened to the outer pipe by the joints, which can be easily loosened. When they are loosened, the inner pipe can be rotated on the support rollers. The slide of the inner pipe downwards in the direction of its axis is stopped by side rollers, fastened to the outer pipe, against which side rollers a flange fastened to the inner pipe presses. The side rollers lightens for its part the rotating of the inner pipe. When the lower surface inside the inner pipe has worn, a rotation with suitable angle is carried out, in which case the wearing course is renewed.

The invention has the advantage that the maintenance costs of the supply chute are for labour's part substantially lower than costs when the known chute technics is used. This is due to that the rotation of the inner pipe, by which new wearing course is arranged, is a simple and quick work and the need for the pipe maintenance through its life is insignificant. In addition, the invention has the advantage that also the material costs in the maintenance of the supply chute according to it are relatively low. This is due to that the inner pipe itself acts as wearing material and the pipe can be utilized wholly because of the rotation of the pipe. Then there is no need to coat the inner pipe by a separate wearing material. Remarkable costs are caused only when the whole inner pipe has to be replaced. Further the invention has the advantage that no leaks occur in the supply chute according to it, the mill environment thus keeping more clean.

In the following, the invention will be described in more detail. Reference will be made in the description to the accompanying drawings, in which
- Fig. 1: presents the principle of the transfer system of the stone material to be milled,
- Figs.2a,b: present an example of the supply chute for stone material according to prior art,
- Fig. 3: presents an example of the supply chute for stone material according to the invention,
- Fig. 4: presents the supply chute in Fig. 3 seen from the lower end,
- Fig. 5: presents an example of the locking way of the inner pipe of the supply chute according to the invention,
- Fig. 6: presents a detail of Fig. 5,
- Figs.7a,b: present the releasing of the inner pipe according to Fig. 5 from the locking,
- Fig. 8: presents another example of the supply chute for stone material according to the invention, and
- Fig. 9: presents an example of the machine locking/releasing the inner pipe according to the invention.

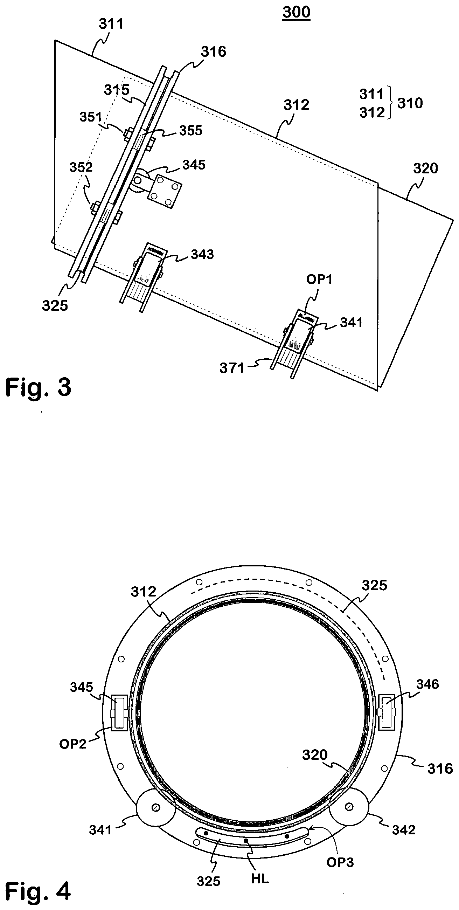

**Fig. 3** shows an example of the supply chute for stone material, generally any wearing hard material, according to the invention. The supply chute 300 has been drawn in its use position, where its tilt angle is about 25 degrees. The supply chute 300 comprises an outer pipe 310 and inner pipe 320. For rolling the inner pipe, the outer pipe is two-part: it has an upper pipe 311 and a lower pipe 312. The upper end of the upper pipe has been cut oblique as the supply pipe in Fig. 2a so that its edge matches, in the use position of the chute, the edge of the opening in the vertical wall of the supply box. In the example of Fig. 3 the upper pipe 311 and lower pipe 312 are fastened to each other by bolt joints. For these joints there are an upper flange 315 on the outer surface of the lower end of the upper pipe and correspondingly a lower flange 316 on the outer surface of the upper end of the lower pipe, and holes of the fastening bolts in these flanges. Two fastening bolts 351, 352 with their nuts are drawn in the figure. The bolt joints are located with certain distances in the circle of the flanges of the outer pipe, e.g. eight ones in all. Each bolt joint includes a gap piece 355, which is pressed between the upper and lower flange. By these gap pieces the distance between the upper and lower flange is set to be suitable. The diameter of the outer pipe is e.g. 120 cm as the one of the supply pipe in Fig. 2.

The diameter of the inner pipe 320 is a little shorter than the one of the outer pipe 310 so that a small distance, e.g. 10 mm, remains between them. The inner pipe is for example of wear resistent steel or cast steel and the thickness of its wall is e.g. 20-40 mm. The inner pipe is here cylindrical extending as mounted in the lower part of the chute 300 to some extent outside both the upper and lower end of the outer pipe. So the wear due to the stone material relates only to the inner pipe. On the outer surface of the inner pipe 320 there is a push flange 325. In the ready structure the push flange is located between the upper flange 315 and the lower flange 316. The distance of these flanges is longer than the thickness of the push flange so that the inner pipe can be a little moved in the direction of its axis. The diameter of the push flange 325 is shorter than the diameter of the upper and lower flange so that the bolts 351, 352 connecting the parts of the outer pipe 310 go over the push flange without touching it.

The mounted inner pipe 320 rests on the support rollers with bearings, in order to make possible to rotate the inner pipe in practice. In Fig. 3 it is seen two support rollers 341, 343 beside the outer pipe; on the other side of the outer pipe there are another two support rollers. The support rollers again are fastened in pairs, the upper and lower pair, to the lower pipe 312 of the outer pipe by cradle mechanisms 371. In order to the support rollers could carry the inner pipe at each support roller there is an opening OP1 in the lower pipe 312.

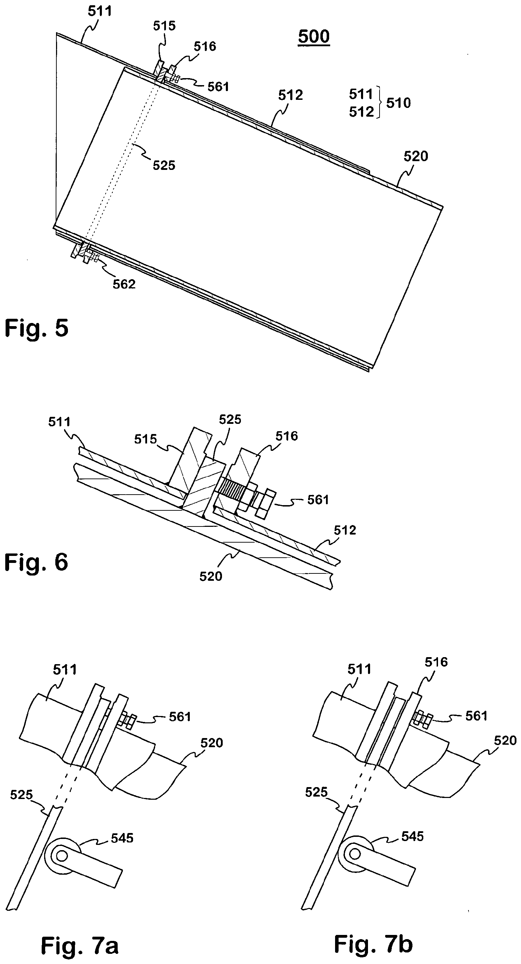

To the outer surface of the lower pipe 312 it has been fastened at least two side rollers 345 with bearings so that their axes are directed towards the axis of the inner pipe. Each side roller extends to the space between the upper flange 315 and lower flange 316 through an opening (OP2, Fig. 4) in the lower flange, towards the push flange 325 of the inner pipe. The aim of the side rollers appears from Figs. 7a,b and their description.

**Fig. 4** shows the supply chute of Fig. 3 viewed from the lower end, in the direction of its axis. The inner pipe 320, lower pipe 312 and the lower flange 316 of the outer pipe fastened to the lower pipe are seen in the figure. Behind the lower flange there is the push flange 325. On opposite sides of the lower flange there are two openings OP2, in which the above-mentioned side rollers 345, 346 partly are located. The fastening parts of the side rollers are not drawn for clarity. The lower roller pair 341, 342 of the support rollers of the inner pipe is seen. In the example the locations of the support rollers are chosen so that in both pair the support points of the inner pipe form about the straight angle with the pipe's axis in the cross section of the pipe.

Fig. 4 shows also an example of the arrangement for rotating the inner pipe 320 by hand. An oblong opening OP3 is both in the lower flange 316 and in the upper flange at the corresponding places down. In the push flange 325, a part of which is seen in the opening OP3, there are holes HL with suitable distances. When rotating the inner pipe, a peg is put in a visible hole HL, extending also through the openings OP3. From this peg it can then pull sidewards by skin or rope. The rotation stops at the latest when said peg reaches the end of the openings OP3.

**Fig. 5** shows an example of the locking parts and locking way of the inner pipe of a supply chute according to the invention. In the figure there is as longitudinal section the outer pipe 510 and inner pipe 520 of the supply chute, as in Fig. 3. Likeways, the outer pipe has an upper flange 515 and lower flange 516, and the inner pipe has a push flange 525 as in Fig. 3. For locking the inner pipe there are a certain amount of threaded holes in the lower flange and locking bolts in these holes. Two locking bolts 561, 562 are drawn in Fig. 5, the total number of them is for example eight.

**Fig. 6** shows as magnified a detail of Fig. 5. There is drawn the locking position for part of one locking bolt 561. This bolt has been screwed inwards so that it has butted the push flange 525 against the upper flange 515. When all the locking bolts in the circle of the lower flange are tightened in that way, the push flange is pressed for its whole length against the upper flange, and the inner pipe will be fastened to the outer pipe. The locking bolts have also a securing nut to be tightened against the lower flange.

**Figs. 7a,b** show the releasing of the inner pipe according to Fig. 5 from the locking. In Fig. 7a the inner pipe 520 is in the locking state in accordance with Fig. 6, and in Fig. 7b it has been released. The releasing takes place so that all locking bolts 561 are screwed open to some extent. In this case the inner pipe, owing to gravity, starts sliding downwards in the direction of its axis. The movement stops, when the push flange 525 presses against the side rollers 545 without touching the lower flange 516 of the outer pipe. In practice, the displacement of the inner pipe is a few millimeters. When the inner pipe has been released, it is easy to rotate it by the power of man. Without the side rollers the push flange 525 would bump against the lower flange 516, in which case the rotating of the inner pipe would be heavy in spite of the support rollers under the pipe.

When the inner pipe is rotated to a new position, new wearing course is naturally obtained on its bottom. In practice a rotation is done e.g. at six week intervals, and at a time it is rotated about 40 degrees. In this case the wearing course in the inner pipe is enough about for a year, after which the whole inner pipe has to be replaced. However, compared with prior art, the reduction in the material and especially in the maintenance work is remarkable.

A more even wear and correspondingly more efficient material use is obtained, when the inner pipe is rotated more frequently and a smaller angle at a time. In this case the inner pipe makes more than one round during its useful life. In principle, the rotation of the inner pipe can be also continuous, but the structure is then more expensive.

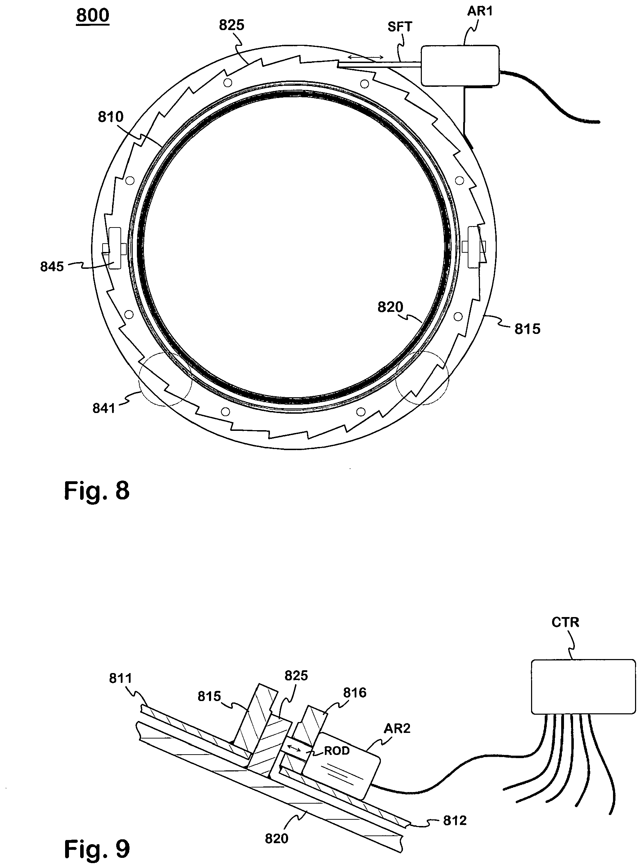

**Fig. 8** shows another example of the supply chute for stone material according to the invention. The supply chute 800 has been drawn from the lower end, seen in the direction of the chute's axis, as in Fig. 4. The outer pipe 810, the inner pipe 820 with the push flange 825 fastened to it and the upper flange 816 of the outer pipe are seen in the figure. In the drawing the lower flange of the outer pipe has been removed from the front of the push flange that this flange would be visible. Also the support rollers 841 and side rollers 845 according to the invention are seen in the drawing.

In this example the edge of the push flange 825 is saw-toothed for rotating the inner pipe 820 by machine. The force required is generated by a linear actuating element AR1, which is in a firm connection to the outer pipe. The actuating element can be e.g. hydraulic or electric. The end of the shaft SFT of the actuating element is fitted to the edge of the teeth of the push flange. One backward-and-forward movement of the shaft rotates the push flange and at the same time the inner pipe 820 by the length of a tooth.

In **Fig. 9** there is an example of the machine locking/releasing the inner pipe according to the invention. The drawing shows one pressing point of the push flange 825 of the inner pipe 820, as Fig. 6. Instead of the locking bolts the structure comprises now linear actuators AR2 fastened to the lower pipe 812, and instead of the threaded holes there are even and slippery holes with certain distances in the lower flange 816. Each actuator comprises a rod, the outer end of which butts in one work position the push flange and is in the other work position in said hole of the lower flange. The actuators AR2 together generate an adequate force to press the push flange 825 firmly against the upper flange 815. The number of the actuators in the circle is e.g. four to eight. They can be hydraulic or made by another principle. These actuators have a shared controller CTR. The controller further can be shared also with an actuator AR1 in accordance with Fig. 8. In this case the releasing, rotation and re-locking of the inner pipe take place for example by a couple of turns of switches.

In this description and claims the qualifiers "upper" and "lower" refer only to the use position of the supply chute, not its storing or transport position.

A supply chute for stone material according to the invention has been described above. However, its structure can differ from that presented. For example the parts of the outer pipe can be connected to each other by means of, instead of the bolts, e.g. welded pieces, which are cut off when needed. The outer pipe can also be continuous without any flanges, in which case the inner pipe is held in its position and rotated by an equipment fastened on the outer surface of the outer pipe. The inventive idea can be applied in different ways within the scope set by the independent claim 1.

## Claims

1. A supply chute (300; 500; 800) for wearing material, which chute is intended to be mounted in an oblique position and comprises
- an outer pipe (310; 510; 810)
- an inner pipe (320; 520; 820) for renewing of wearing course inside the supply chute, the outer diameter of the inner pipe being shorter than the inner diameter of the outer pipe and
- locking parts (561, 562; AR2) for holding the inner pipe in a certain locking state and for releasing from it,
**characterized in that** said supply chute (300; 500; 800) further comprises
- support rollers (341-344) with bearings fastened to the outer pipe (310; 510; 810) under the inner pipe to make possible its rotating and
- a structure (325; 825, OP2, 345, 346; 845, OP3, HL; AR1, SFT) for rotating the inner pipe (320; 520; 820).

2. A supply chute according to claim 1, **characterized in that**
- the outer pipe comprises an upper pipe (311; 511; 811) with an upper flange (315; 515; 815) on outer surface of its lower end and a lower pipe (312; 512; 812) with a lower flange (316; 516; 816) on outer surface of its upper end, which upper and lower pipes are connected to each other through the upper and lower flanges so that a gap with a certain width is between the upper and lower flanges, and
- on outer surface of the inner pipe (320; 520; 820) there is a push flange (325; 525; 825), which is located between the upper flange (315; 515; 815) and the lower flange (316; 516; 816), the thickness of the push flange being shorter than the width of said gap between the upper and lower flanges.

3. A supply chute according to claim 2, **characterized in that** the upper pipe (311; 511) and lower pipe (312; 512) are connected to each other by fastening bolts (351, 352), each bolt going through a hole in the upper (315; 515) flange and in the lower flange (316; 516), and a gap piece (355) is located at each fastening bolt between the upper and lower flanges to set the width of said gap between the upper and lower flanges, when the fastening bolts press the upper and lower flanges towards each other.

4. A supply chute according to claim 2, **characterized in that** said structure for rotating the inner pipe (320; 520; 820) comprises
- at least two side rollers (345, 346; 545; 845) with bearings fastened to the outer surface of the lower pipe (312; 512; 812) of the outer pipe, the axis of each side roller being directed towards the axis of the inner pipe, and
- an opening (OP2) in the lower flange (316; 516; 816) at each side roller, through which opening one side roller extends to the space between the upper (315; 515; 815) and lower (316; 516; 816) flange so that the push flange (325; 525; 825) in said space is pressed against the side rollers (345, 346; 545; 845) when the inner pipe is released from said locking state.

5. A supply chute according to claim 4, **characterized in that** said structure for rotating the inner pipe (320) further comprises an oblong opening (OP3) both down in the lower flange (316) and in the upper flange (315) and holes (HL) with suitable distances in the push flange (325) to pull the inner pipe sidewards from a peg put through one hole (HL) and said oblong openings (OP3).

6. A supply chute according to claim 4, **characterized in that** the edge of the push flange (825) is saw-toothed, and said structure for rotating the inner pipe (820) further comprises an actuating element (AR1) in a firm connection to the outer pipe, the actuating element having a shaft (SFT), which is arranged to do linear backward-and-forward movements, an end of which shaft fits to the edge of a teeth of the push flange.

7. A supply chute according to claim 2, **characterized in that** in the lower flange (516) there are with certain distances threaded holes, and said locking parts comprise locking bolts (561, 562), each locking bolt being in a threaded hole, to butt the push flange (525) against the upper flange (515) and release it by screwing the locking bolts.

8. A supply chute according to claim 2, **characterized in that** in the lower flange (816) there are with certain distances even holes, and said locking parts comprise at each even hole an actuator (AR2) fastened to the lower pipe (812)/the lower flange (816), which actuator has a rod extending to said hole, the outer end of which rod being arranged to butt in one work position the push flange (825) against the upper flange (815) and to be in the other work position in said even hole of the lower flange.

9. A supply chute according to claims 6 and 8, **characterized in that** said actuating element (AR1) and actuators (AR2) are hydraulic.

10. A supply chute according to claims 6 and 8, **characterized in that** said actuating element (AR1) and actuators (AR2) have a shared controller (CTR).

## Patentansprüche

1. Eine Zuführschurre (300; 500; 800) für zehrendes Material, wobei die Schurre in einer schrägen Stellung montiert zu werden ist und Folgendes umfasst
- ein Außenrohr (310; 510; 810),
- ein Innenrohr (320; 520; 820) zur Erneuerung der Verschleißschicht in der Zuführschurre, wobei der Außendurchmesser des Innenrohrs kleiner als der Innendurchmesser des Außenrohrs ist, und
- Verriegelungsteile (561, 562; AR 2) zum Halten des Innenrohres in einem bestimmten Verriegelungszustand und zum Lösen aus diesem Zustand,
**dadurch gekennzeichnet, dass** besagte Zuführschurre (300; 500; 800) ferner Folgendes aufweist
- Stützrollen (341-344) mit Lagern, die am Außenrohr (310; 510; 810) unter dem Innenrohr angebracht sind, um dessen Drehung zu ermöglichen,
- eine Anordnung (325; 825, OP2, 345, 346; 845, OP3, H L; AR1, SFT) zum Drehen des Innenrohrs (320; 520; 820).

2. Eine Zuführschurre gemäß Anspruch 1, **dadurch gekennzeichnet, dass**
- das Außenrohr aus einem oberen Rohr (311;. 511; 811) mit einem oberen Flansch (315; 515; 815) auf der Außenfläche seines unteren Endes und einem unteren Rohr (312; 512; 812) mit einem unteren Flansch (316; 516; 816) auf der Außenfläche seines oberen Endes besteht, wobei das untere und das obere Rohr derart durch den oberen und unteren Flansch miteinander verbunden sind, dass zwischen dem unteren und oberen Flansch ein Spalt mit einer bestimmten Breite besteht, und dass
- es auf der Außenfläche des Innenrohrs (320; 520; 820) einen Druckflansch (325; 525; 825) gibt, der zwischen dem oberen Flansch (315; 515; 815) und dem unteren Flansch (316; 516; 816) gelegen ist, wobei die Dicke des Druckflansches kleiner als die Breite des besagten Spalts zwischen oberem und unterem Flansch ist.

3. Eine Zuführschurre gemäß Anspruch 2, **dadurch gekennzeichnet, dass** das obere Rohr (311; 511) und das untere Rohr (312; 512) durch Befestigungsschrauben (351, 352) miteinander verbunden sind, wobei jede Schraube durch ein Loch im oberen Flansch (315; 515) und im unteren Flansch (316; 516) geht, und dass ein Abstandsstück (355) an jeder Befestigungsschraube zwischen dem oberen und unteren Flansch angeordnet ist, um die Breite des Spaltes zwischen dem oberen und dem unteren Flansch einzustellen, wenn die Befestigungsschrauben den oberen und den unteren Flansch gegeneinanderdrücken.

4. Eine Zuführschurre gemäß Anspruch 2, **dadurch gekennzeichnet, dass** besagte Anordnung zum Drehen des Innenrohrs (320; 520; 820) Folgendes umfasst
- mindestens zwei Seitenrollen (345, 346; 545; 845) mit Lagern, die an der Außenfläche des unteren Rohres (312; 512; 812) des Außenrohres befestigt sind, wobei die Achse jeder Seitenrolle auf die Achse des Innenrohres gerichtet ist, und
- eine Öffnung (OP2) im unteren Flansch (316; 516; 816) an jeder Seitenrolle, durch die sich eine Seitenrolle in den Raum zwischen dem oberen (315; 515; 815) und dem unteren (316; 516; 816) Flansch erstreckt, sodass der Druckflansch (325; 525; 825) in besagtem Raum gegen die Seitenrollen (345, 346; 545; 845) gedrückt ist, wenn das Innenrohr aus besagtem Verriegelungszustand los ist.

5. Eine Zuführschurre gemäß Anspruch 4, **dadurch gekennzeichnet, dass** besagte Anordnung zum Drehen des Innenrohrs (320) zusätzlich eine längliche Öffnung (OP3) sowohl im unteren Flansch (316) als auch im oberen Flansch (315) und Löcher (HL) mit geeigneten Abständen im Druckflansch (325) aufweist, um das Innenrohr von einem durch ein Loch (HL) und besagte längliche Öffnungen (OP3) geführten Stift seitwärts zu ziehen.

6. Eine Zuführschurre gemäß Anspruch 4, **dadurch gekennzeichnet, dass** der Rand des inneren Druckflansches (825) sägeverzahnt ist und besagte Anordnung zum Drehen des Innenrohres (820) zusätzlich ein Betätigungselement (AR1) in einer festen Verbindung mit dem Außenrohr aufweist, wobei das Betätigungselement über einen Schaft (SFT) verfügt, der lineare Rückwärts- und Vorwärtsbewegungen zu durchführen angeordnet ist, wobei ein Ende des Schafts an die Kante eines Zahns des Druckflansches passt.

7. Eine Zuführschurre gemäß Anspruch 2, **dadurch gekennzeichnet, dass** im unteren Flansch (516) es gibt in bestimmten Abständen Gewindebohrungen und dass besagte Verriegelungsteile Verriegelungsschrauben (561, 562) aufweisen, wobei jede Verriegelungsschraube in ein Gewindeloch eingedreht ist, um durch Drehen der Verriegelungsschrauben den Druckflansch (525) gegen den oberen Flansch (515) zu drücken und ihn zu lösen.

8. Eine Zuführschurre gemäß Anspruch 2, **dadurch gekennzeichnet, dass** im unteren Flansch (816) es gibt in bestimmten Abständen glatte Löcher ohne Gewinde und besagte Verriegelungsteile an jedem glatten Loch ein Stellglied (AR2) aufweisen, das an dem unteren Rohr (812)/unteren Flansch (816) befestigt ist, wobei das Stellglied eine Stange aufweist, die sich bis zu besagtem Loch erstreckt und deren äußeres Ende so angeordnet ist, dass es in einer Arbeitsposition den Druckflansch (825) gegen den oberen Flansch (815) drückt und sich in der anderen Arbeitsposition in besagtem glatten Loch des unteren Flansches befindet.

9. Eine Zuführschurre gemäß den Ansprüchen 6 und 8, **dadurch gekennzeichnet, dass** das besagte Betätigungselement (AR1) und die besagten Stellglieder (AR2) hydraulisch sind.

10. Eine Zuführschurre gemäß den Ansprüchen 6 und 8, **dadurch gekennzeichnet, dass** das besagte Betätigungselement (AR1) und die besagten Stellglieder (AR2) über eine gemeinsame Steuerung (CTR) verfügen.

## Revendications

1. Une goulotte d'alimentation (300; 500; 800) pour matériau d'usure, laquelle goulotte est destinée à être montée en position oblique et comprend
- un tube extérieur (310; 510; 810)
- un tube intérieur (320; 520; 820) pour le renouvellement de la couche d'usure à l'intérieur de la goulotte d'alimentation, le diamètre extérieur du tube intérieur étant plus court que le diamètre intérieur du tube extérieur et
- des pièces de verrouillage (561, 562; AR2) pour maintenir le tube intérieur dans un certain état de verrouillage et pour le libérer de celui-ci,
**caractérisée en ce que** ladite goulotte d'alimentation (300; 500; 800) comprend en outre
- des rouleaux de soutien (341-344) avec des paliers fixés sur le tube extérieur (310; 510; 810) sous le tube intérieur pour rendre possible sa rotation et
- une structure (325; 825, OP2, 345, 346; 845, OP3, HL; AR1, SFT) pour permettre la rotation du tube intérieur (320; 520; 820).

2. Une goulotte d'alimentation selon la revendication 1, **caractérisée en ce que**
- le tube extérieur comprend un tube supérieur (311; 511; 811) avec une bride supérieure (315; 515; 815) sur la surface extérieure de son extrémité inférieure et un tube inférieur (312; 512; 812) avec une bride inférieure (316; 516; 816) sur la surface extérieure de son extrémité supérieure, lesquels tubes supérieur et inférieur sont reliés entre eux par les brides supérieure et inférieure, de sorte qu'il y a un espace d'une certaine largeur entre les brides supérieure et inférieure, et
- sur la surface extérieure du tube intérieur (320; 520; 820), il y a une bride de poussée (325 ; 525 ; 825) qui est située entre la bride supérieure (315; 515; 815) et la bride inférieure (316; 516; 816), l'épaisseur de la bride de poussée étant inférieure à la largeur dudit espace entre les brides supérieure et inférieure.

3. Une goulotte d'alimentation selon la revendication 2, **caractérisée en ce que** le tube supérieur (311; 511) et le tube inférieur (312; 512) sont reliés l'un à l'autre par des boulons de fixation (351, 352), chaque boulon passant par un trou dans la bride supérieure (315; 515) et dans la bride inférieure (316; 516), et une pièce d'espacement (355) est située au niveau de chaque boulon de fixation entre les brides supérieure et inférieure pour régler la largeur dudit espace entre les brides supérieure et inférieure lorsque les boulons de fixation appuient les brides inférieure et supérieure l'une vers l'autre.

4. Une goulotte d'alimentation selon la revendication 2, **caractérisée en ce que** ladite structure pour la rotation du tube intérieur (320; 520; 820) comprend
- au moins deux rouleaux latéraux (345, 346; 545; 845) avec des paliers fixés sur la surface extérieure du tube inférieur (312; 512; 812) du tube extérieur, l'axe de chaque rouleau latéral étant dirigé vers l'axe du tube intérieur, et
- une ouverture (OP2) dans la bride inférieure (316; 516; 816) au niveau de chaque rouleau latéral, à travers laquelle un rouleau latéral s'étend dans l'espace entre la bride supérieure (315; 515; 815) et la bride inférieure (316; 516; 816) de telle sorte que la bride de poussée (325; 525; 825) dans ledit espace est appuyée contre les rouleaux latéraux (345, 346; 545; 845) lorsque le tube intérieur est libéré dudit état de verrouillage.

5. Une goulotte d'alimentation selon la revendication 4, **caractérisée en ce que** ladite structure pour la rotation du tube intérieur (320) comprend en outre une ouverture oblongue (OP3) à la fois en bas dans la bride inférieure (316) et dans la bride supérieure (315) et des trous (HL) avec des distances appropriées dans la bride de poussée (325) pour tirer le tube intérieur vers le côté depuis une cheville introduite dans un trou (HL) et lesdites ouvertures oblongues (OP3).

6. Une goulotte d'alimentation selon la revendication 4, **caractérisée en ce que** le bord de la bride de poussée (825) est denté, et ladite structure pour la rotation du tube intérieur (820) comprend en outre un élément d'actionnement (AR1) fermement relié au tube extérieur, l'élément d'actionnement ayant un arbre (SFT) qui est agencé pour effectuer des mouvements linéaires de va-et-vient, une extrémité de l'arbre étant adaptée au bord des dents de la bride de poussée.

7. Une goulotte d'alimentation selon la revendication 2, **caractérisée en ce que** dans la bride inférieure (516) il y a à certaines distances des trous filetés, et lesdites pièces de verrouillage comprennent des boulons de verrouillage (561, 562), chaque boulon de verrouillage se trouvant dans un trou fileté, pour enfoncer la bride de poussée (525) contre la bride supérieure (515) et la libérer en vissant les boulons de verrouillage.

8. Une goulotte d'alimentation selon la revendication 2, **caractérisée en ce qu'**il y a dans la bride inférieure (816) à certaines distances des trous réguliers, et lesdites pièces de verrouillage comprennent au niveau de chaque trou régulier un actionneur (AR2) fixé sur le tube inférieur (812)/la bride inférieure (816), lequel actionneur a une tige s'étendant jusqu'audit trou, l'extrémité extérieure de la tige étant disposée pour enfoncer dans une position de travail la bride de poussée (825) contre la bride supérieure (815) et pour être dans l'autre position de travail dans ledit trou régulier de la bride inférieure.

9. Une goulotte d'alimentation selon les revendications 6 et 8, **caractérisée en ce que** l'élément d'actionnement (AR1) et les actionneurs (AR2) sont hydrauliques.

10. Une goulotte d'alimentation selon les revendications 6 et 8, **caractérisée en ce que** ledit élément d'actionnement (AR1) et lesdits actionneurs (AR2) ont un régulateur (CTR) commun.
